# DEMANDE DE BREVET EUROPEEN

(11) **EP 4 131 889 A1**
(43) Date de publication de la demande: **08.02.2023**
(21) Numéro de dépôt: 22188488.5
(22) Date de dépôt: 03.08.2022
(51) Int. Cl.: H04L 45/12, H04W 40/02, H04L 65/612, G06F 11/30

(54) **PROCÉDÉ PERMETTANT DE RÉDUIRE L'EMPREINTE CARBONE DE LA DISTRIBUTION DE CONTENUS NUMÉRIQUES, NOTAMMENT PAR LE RECOURS À UN RÉSEAU DE DIFFUSION ET UN STOCKAGE LOCAL DES CONTENUS**

(30) Priorité: 06.08.2021 FR 2108550
(71) Demandeur: Quadrille Ingenierie, 92130 Issy-Les-Moulineaux (FR)
(72) Inventeur: BATTAS, Xavier, 92130 ISSY-LES-MOULINEAUX (FR); GRIVET, Vincent, 75008 PARIS (FR)
(74) Mandataire: Nony

(57) **Abrégé**

Procédé de sélection d'un réseau de diffusion de contenu numérique en vue d'une mise en mémoire, transitoire ou non, dans au moins une unité de cache utilisateur (150), d'au moins un contenu (C) fourni par un fournisseur de service (OTT), dans lequel :
- on permet au fournisseur de service (OTT) d'adresser à un serveur de distribution (100) une requête relative à un contenu (C) à distribuer, et
- on sélectionne un chemin de distribution vers l'unité de cache utilisateur (150) en fonction de l'empreinte carbone de ce chemin.

## Description

### Domaine technique

La présente invention concerne la distribution de contenus numériques, et plus particulièrement un procédé de réduction de l'empreinte carbone de celle-ci au moyen de la sélection et de l'utilisation, même dans le cas de contenus prévus pour une consommation à la demande, d'un réseau de diffusion de contenus numériques qui a une empreinte carbone plus faible que la distribution IP, combinée avec l'usage d'un stockage local (« cache ») des contenus dans l'attente de leur consommation.

### Technique antérieure

De manière conventionnelle, un contenu numérique est distribué sur un réseau de distribution de contenu (Content Delivery Network : CDN) en flux continu (streaming). Dans ce mode de distribution, chaque utilisateur se connecte avec une connexion individuelle (unicast) au serveur distant d'un opérateur pour effectuer la lecture du contenu numérique en flux continu. Netflix, Amazon Prime et Disney+ sont des exemples d'opérateurs fournissant ce type de service.

La distribution de contenus numériques selon ce procédé est une source importante d'émissions CO₂.

On a ainsi cherché à réduire ces émissions.

La demande EP 2 733 624 divulgue une méthode pour recommander des contenus numériques à distribuer sur un réseau de télécommunications à un utilisateur, comportant une estimation de l'impact environnemental du chemin de distribution de ces contenus. Toutefois, cette méthode impacte fortement l'offre et la consommation de contenus pour l'utilisateur cherchant à adopter un comportement écoresponsable ; elle n'est pas satisfaisante à cet égard, et encore moins dans le sens où elle ne réduit en aucun cas l'impact carbone d'un utilisateur qui ne modifierait pas sa consommation.

### Exposé de l'invention

Il existe donc un besoin pour perfectionner encore la distribution de contenus numériques, notamment en termes de réduction de l'empreinte carbone, sans pour autant contraindre la consommation en quantité ou en choix de contenus des utilisateurs.

### Procédé de sélection d'un réseau de diffusion de contenu numérique

L'invention vise à répondre à cet objectif et a pour objet, selon l'un de ses aspects, un procédé de sélection d'un réseau de diffusion de contenu numérique en vue d'une mise en mémoire, transitoire ou non, dans au moins une unité de cache utilisateur, d'au moins un contenu fourni par un fournisseur de service, notamment l'un au moins des contenus les plus demandés, dans lequel :
- on permet au fournisseur de service d'adresser à un serveur de distribution une requête relative à un contenu à distribuer, et
- on sélectionne un chemin de distribution, notamment parmi les réseaux TNT, le réseau satellitaire ou IP à faible impact carbone, vers l'unité de cache utilisateur, au moins en fonction de l'empreinte carbone de ce chemin.

Grâce à l'invention, le contenu numérique peut être distribué de façon optimale, minimisant l'émission carbone, et de façon asynchrone (par rapport à sa consommation) vers l'unité de cache utilisateur, en empruntant le réseau de diffusion ayant la plus faible empreinte carbone. Le calcul de l'empreinte carbone peut notamment faire intervenir le nombre d'utilisateurs ciblés, c'est-à-dire ayant une probabilité élevée de demander à visualiser ce contenu, le moment où le contenu doit être disponible pour les utilisateurs, le ou les chemins de distributions autorisés, ainsi que la zone géographique où se situent ces utilisateurs. Ces informations peuvent découler de la connaissance de profils utilisateurs par le fournisseur de service.

La mémoire peut stocker de façon transitoire le contenu dans le cas où le contenu numérique est à diffuser en direct. On parle alors de « *bufferisation* » du contenu. Le contenu peut encore être mémorisé dans l'unité de cache à l'avance, en profitant par exemple d'une disponibilité de bande passante d'un réseau de télévision numérique terrestre ou de télévision par satellite, pour transmettre à l'avance des paquets de ce contenu, en vue de leur lecture ultérieure, à la demande de l'utilisateur. Dans ce cas le contenu peut rester stocké plusieurs jours dans la mémoire de l'unité de cache, prêt à être diffusé si l'utilisateur en fait la demande. Ce type de distribution est particulièrement intéressant pour des contenus ayant une probabilité élevée d'être demandés par un grand nombre d'utilisateurs, car dans ce cas la mise en mémoire dans l'unité de cache est exploitée. Comme cette mise en mémoire peut généralement se faire au prix d'une empreinte carbone réduite, on bénéficie de cette manière d'une solution efficace pour réduire l'empreinte carbone sans pour autant pénaliser l'utilisateur dans le choix des contenus qu'il peut visualiser.

On peut transmettre, le cas échéant, au fournisseur de service une information renseignant sur l'empreinte carbone de la distribution dudit contenu via le chemin sélectionné. Cette information peut être une estimation de l'empreinte carbone de la distribution dudit contenu via le chemin sélectionné. De manière optionnelle, suivant la réception de ladite information, on peut permettre au fournisseur de service de valider ou non sa requête relative au contenu à distribuer. La transmission de ladite information s'effectue préférentiellement avant la distribution du contenu.

En variante, le fournisseur de service n'est pas informé en amont du mode de distribution sélectionné par le serveur qui minimise l'empreinte carbone. Dans ce cas, la distribution peut s'effectuer de manière totalement transparente pour le fournisseur de service, le serveur se chargeant de sélectionner le réseau de distribution ayant l'empreinte carbone la plus faible. Le chemin de distribution peut être choisi parmi un réseau de télévision numérique terrestre, un réseau de télévision par satellite, un réseau internet multidiffusion et/ou un réseau de téléphonie.

### Procédé de mise en mémoire

L'invention a encore pour objet, selon un autre de ses aspects, un procédé de mise en mémoire d'au moins un contenu dans une unité de cache utilisateur, dans lequel on adresse ledit contenu à un réseau de diffusion correspondant au chemin sélectionné par la mise en œuvre du procédé de sélection d'un réseau de diffusion selon l'invention, et on le mémorise dans l'unité de cache utilisateur à sa réception par celle-ci, en vue de sa diffusion ultérieure ou sensiblement en temps réel, en flux continu à partir de l'unité de cache utilisateur.

### Procédé de diffusion

L'invention a également pour objet, selon un autre de ses aspects, un procédé de diffusion d'au moins un contenu, dans lequel on effectue la mise en mémoire dans une unité de cache utilisateur dudit contenu en mettant en œuvre le procédé de mise en mémoire selon l'invention, et l'on diffuse vers un lecteur ledit contenu en flux continu à partir de l'unité de cache utilisateur.

### Serveur de distribution

L'invention a encore pour objet, selon un autre de ses aspects, un serveur de distribution d'au moins un contenu numérique, notamment pour la mise en œuvre d'un procédé selon l'invention, comportant :
- au moins une interface de programmation API GD permettant à un fournisseur de service de transmettre au serveur au moins un contenu à distribuer ; et
- une application BDE pour sélectionner un chemin de distribution vers une unité de cache utilisateur au moins en fonction de l'empreinte carbone de ce chemin.

De préférence, le serveur comporte une application de suivi d'émission carbone CT configurée pour récupérer et/ou répertorier des informations sur la quantité de carbone émise lors de la distribution d'un contenu, notamment sur une période donnée.

Le serveur peut comporter une première interface de programmation API CT permettant de transmettre au fournisseur de service une information renseignant sur l'empreinte carbone pour la distribution des contenus devant être distribués via une mise en mémoire, transitoire ou non, dans les unités de cache utilisateur. Le cas échéant, lorsque cette information est transmise préalablement à la diffusion, cela permet au fournisseur de service de prendre la décision de valider ou non la transmission au serveur du contenu à distribuer.

Le serveur peut comporter, que la première interface API CT soit présente ou non, une deuxième interface de programmation API CT permettant de transmettre à un organisme régulateur et/ou au législateur des données statistiques sur l'empreinte carbone liée à la distribution des contenus. Cela permet d'orienter ledit organisme dans l'instauration de nouvelles directives et/ou lois, le cas échéant.

De préférence, l'application BDE est configurée pour interroger l'application de suivi d'émission carbone CT afin de connaître pour chaque chemin de distribution possible l'empreinte carbone qui est associée à ce chemin. Ceci permet à l'application BDE de sélectionner le chemin de distribution dont l'empreinte carbone est la plus faible. L'interface de programmation API GD est préférentiellement configurée pour permettre au fournisseur de service de transmettre au serveur l'adresse URL ou la source d'accès au contenu, l'identifiant du contenu et au moins l'une des informations suivantes, mieux l'ensemble des informations suivantes :
- des informations de nature temporelle, définissant quand ou sur quelle période le contenu est à distribuer ;
- des informations de nature géographique, définissant les zones géographiques sur lesquelles le contenu est à distribuer, ces zones étant notamment caractérisées par leur identifiant de zone et le nombre d'utilisateurs ciblés ;
- des informations relatives au profil des utilisateurs à qui le contenu est à distribuer ; et
- des informations relatives aux chemins de distribution autorisés.

Ces informations peuvent être utilisées par l'application BDE pour optimiser la distribution en fonction des empreintes carbone des chemins de diffusion disponibles.

Par exemple, si le contenu est à distribuer à un nombre élevé d'utilisateurs sur une zone géographique donnée, pour une diffusion en différé, et que ces utilisateurs disposent d'une unité de cache, il peut être intéressant de privilégier la mise en mémoire de ce contenu via une distribution par un mode de distribution à faible empreinte carbone ; si au contraire, le contenu ne vise qu'un faible nombre d'utilisateurs, il est probable qu'une mise en mémoire ne sera pas intéressante, et la diffusion de ce contenu sera effectuée par exemple en monodiffusion, même si ce chemin est a priori d'empreinte carbone plus élevée.

La ou les interfaces de programmation API rendent le serveur interopérable et donc exploitable par différents fournisseurs de service.

Par « contenus les plus demandés » il faut comprendre les contenus qui figurent parmi les 50 contenus les plus demandés, notamment parmi les 20 les plus demandés, voire les 10 les plus demandés.

Par « réseau IP à faible impact carbone », il faut comprendre un réseau IP dont l'empreinte carbone est plus faible que celles d'autres réseaux IP existants, en raison par exemple de l'origine de l'électricité utilisée pour alimenter les équipements de ce réseau ou les refroidir, ou du bilan énergétique global lorsque la chaleur produite par les équipements est réutilisée pour le chauffage de logements ou d'installations par exemple.

### Brève description des dessins

L'invention pourra être mieux comprise à la lecture de la description détaillée qui va suivre, d'exemples non limitatifs de mise en œuvre de celle-ci, et à l'examen du dessin annexé, sur lequel :
[Fig 1] La figure 1 est une vue schématique d'un système mettant en œuvre les procédés selon l'invention ;
[Fig2] La figure 2 représente schématiquement un serveur de distribution selon l'invention ;
[Fig3] La figure 3 illustre schématiquement une unité de cache utilisateur pouvant être utilisée dans le cadre de l'invention ; et
[Fig4] La figure 4 illustre schématiquement différentes interactions des composants du système de la figure 1.

### Description détaillée

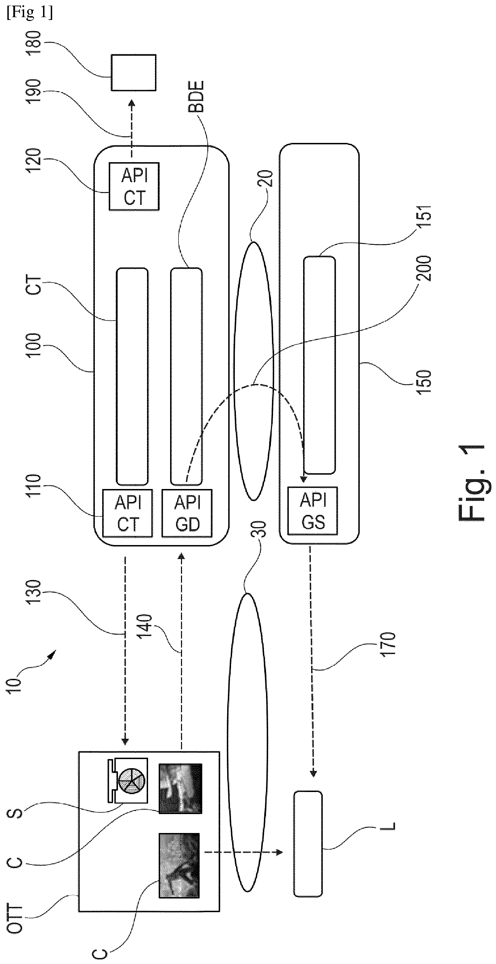

On a illustré schématiquement à la figure 1 un système 10 mettant en œuvre les procédés selon l'invention. On a aussi représenté à cette figure une diffusion en flux continu conventionnelle où un fournisseur de service OTT, par exemple Netflix, peut diffuser en flux continu et en monodiffusion via un réseau CDN (Content Delivery Network) 30 un contenu C à un lecteur L. Ce lecteur Lest, par exemple, celui d'un téléphone mobile ou d'un téléviseur d'un utilisateur.

Le système 10 comporte un serveur de distribution 100 et plusieurs unités de cache utilisateur 150 (seule l'une d'entre elles étant représentée dans un souci de clarté).

Le serveur de distribution 100 comprend des moyens informatiques, par exemple un ou plusieurs mini-ordinateurs et l'environnement hardware associé, qui exécutent une application BDE et une application de suivi d'émission carbone CT.

L'application BDE est configurée pour sélectionner un chemin de distribution 20 vers chaque unité de cache utilisateur 150 en fonction de l'empreinte carbone des différents chemins possibles. L'application de suivi d'émission carbone CT est configurée pour récupérer et/ou répertorier des informations sur la quantité de carbone émise lors de la distribution d'un contenu C, notamment sur une période donnée.

Le serveur de distribution 100 comporte une interface de programmation API GD permettant au fournisseur de service OTT de transmettre au serveur 100 le contenu C à distribuer, ainsi que des informations annexes relatives à sa distribution, détaillées plus loin.

Le serveur de distribution 100 peut comporter deux interfaces de programmation API CT additionnelles 110 et 120, permettant pour la première de transmettre au fournisseur de service OTT une information S renseignant sur l'empreinte carbone associée à la distribution des contenus C devant être distribués, et pour la deuxième de transmettre à un organisme régulateur et/ou au législateur 180 des données statistiques sur l'empreinte carbone liée à la distribution des contenus C. L'empreinte carbone est par exemple quantifiée selon la norme internationale ISO 14067.

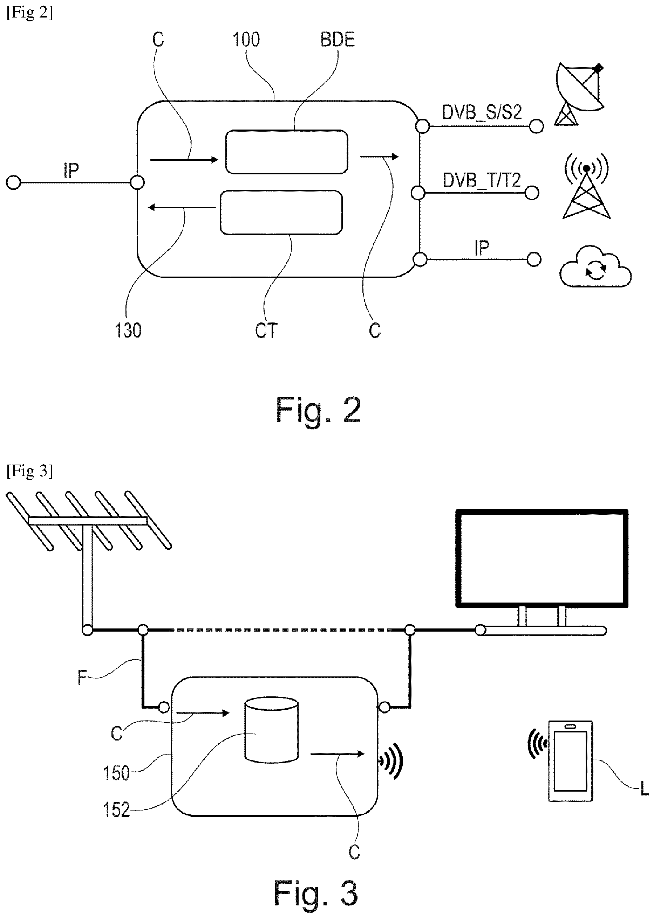

La figure 2 représente schématiquement un serveur de distribution 100 selon l'invention, accessible par le fournisseur de service OTT en réseau internet multidiffusion IP. Après que le chemin de distribution ayant la plus faible empreinte carbone a été sélectionné par l'application BDE, le contenu C est distribué vers l'unité de cache utilisateur 150 sur ce chemin.

Le contenu C peut être distribué par le serveur de distribution 100. En variante, après sélection du chemin de distribution, le serveur de distribution 100 prévient le fournisseur de service OTT qui se charge de la distribution du contenu C.

La distribution du contenu C peut s'effectuer en intégrant ce dernier dans les créneaux disponibles de la bande passante. La distribution du contenu peut en particulier se faire selon le procédé de diffusion décrit dans la demande WO 2018/108578 dans laquelle on concatène des séries de chunks correspondant à un ou plusieurs contenus, en fichiers d'archives sans toutes les informations de désarchivage correspondantes, on diffuse au moins les fichiers d'archives sur un canal du réseau sélectionné, et on diffuse, de façon répétée, au moins pour chaque fichier d'archive, des messages d'annonce contenant des informations nécessaires au désarchivage du fichier d'archive.

Le chemin de distribution du contenu C peut être un réseau de télévision numérique terrestre TNT selon la norme DVB_T ou DVB_T2, un réseau de télévision par satellite selon la norme DVB_S ou DVB_S2 et/ou un réseau internet multidiffusion IP, selon l'exemple de la figure 2.

Le réseau de télévision numérique terrestre TNT comporte un réseau de réémetteurs hertziens terrestres via lequel est diffusé le signal de télévision numérique.

La télévision numérique est transmise sur ondes radio à travers l'espace terrestre de la même façon que la télévision analogique, la principale différence étant l'utilisation d'émetteurs multiplex permettant la transmission de plusieurs programmes sur le même canal. La télévision numérique terrestre utilise les bandes de fréquences auparavant allouées à la télévision analogique (bande III en VHF, bandes IV et V en UHF). En Europe, la transmission se fait selon la norme DVB-T.

Le réseau de télévision par satellite comporte un ou plusieurs satellites en orbite géostationnaire depuis lesquels sont émis des programmes de télévision analogiques et numériques, selon la norme DVB-S. Le satellite offre un excellent rendement en matière de zone couverte et constitue le moyen de diffusion le moins onéreux, notamment par rapport à la télévision numérique terrestre TNT.

Le réseau internet multidiffusion IP comporte des routeurs assurant le routage des paquets de données à distribuer, en les faisant transiter d'une interface réseau vers une autre, selon un ensemble de règles, jusqu'à atteindre les destinataires.

Le réseau internet multidiffusion IP fournit une méthode efficace pour le transport des communications point à multipoint. La multidiffusion IP est un mode de diffusion sélectif permettant à une source d'émettre une seule copie de son trafic à destination de plusieurs récepteurs. C'est le réseau IP qui est alors chargé de répliquer de façon optimale le trafic au plus près des récepteurs en créant des arbres de distribution multidiffusion. Les routeurs sont chargés de répliquer les paquets de données aux nœuds des arbres de distribution, c'est-à-dire aux endroits où le chemin vers les destinataires diverge.

La multidiffusion IP convient tout particulièrement pour la transmission de programmes radiophoniques, télévisés, pour la diffusion événementielle (concerts, conférences), pour la fourniture de cours à distance (télé-enseignement ou téléformation), pour la distribution d'informations à des communautés diverses (dépêches de presse, cours de bourse, ...).

Les figures 1 et 3 illustrent schématiquement une unité de cache utilisateur 150 pouvant être utilisée dans le cadre de l'invention.

Chaque unité de cache 150 est présente au niveau utilisateur, et comporte par exemple un tuner relié à une antenne de télévision numérique terrestre et/ou une antenne satellite. L'unité de cache 150 comporte une mémoire informatique, par exemple un disque SSD ou un disque dur, où un contenu à diffuser peut être mis en mémoire tampon pour une diffusion en temps réel ou mis en mémoire en vue d'une diffusion en différé. L'unité de cache 150 peut être constituée par un équipement séparé du lecteur ou être intégrée au lecteur. L'unité de cache 150 exécute une application d'accès au contenu local 151 permettant de retrouver l'URL ou la source d'accès au contenu défini par son identifiant.

L'unité de cache 150 comprend également une interface d'application API GS configurée pour envoyer une requête au lecteur L avec l'URL ou la source d'accès au contenu C, lorsque l'utilisateur veut visualiser le contenu.

L'unité de cache 150 est reliée par un câble coaxial à une antenne satellite, dans l'exemple de la figure 3, dotée d'une tête mono ou multi-satellite. L'unité de cache 150 comporte un décodeur. Après réception d'un signal de radiodiffusion F, l'unité de cache 150 le décode pour en extraire le contenu C. Si le contenu est sous forme de segments d'un fichier d'archive de chunks, l'unité de cache 150 reconstruit le fichier d'archive à partir des segments, récupère des messages d'annonce contenant des informations nécessaires au désarchivage du fichier d'archivé, désarchive le fichier d'archivé et en récupère le contenu.

Le contenu C est ensuite enregistré dans une mémoire 152 qui peut être transitoire ou non, selon la nature de diffusion voulue du contenu. Si le contenu C est à diffuser en direct ou en léger différé, la mémorisation est transitoire. Ainsi, le contenu C est accessible pour être lu par le lecteur L en flux continu.

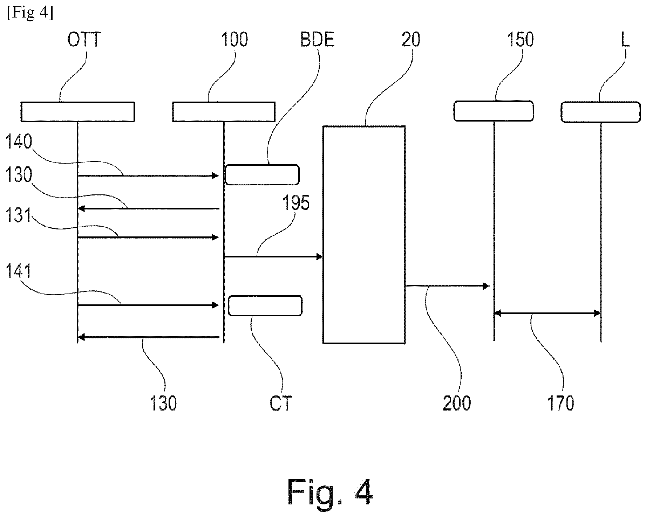

Le fonctionnement du système, illustré schématiquement à la figure 4, est par exemple le suivant.

Le fournisseur de service OTT adresse, à une étape 140, au serveur de distribution 100 une requête relative au contenu C à distribuer.

Par exemple, le fournisseur de service OTT transmet au serveur 100 l'adresse URL ou la source d'accès au contenu C, l'identifiant du contenu et au moins l'une des informations suivantes, mieux l'ensemble des informations suivantes :
- des informations de nature temporelle, définissant quand ou sur quelle période le contenu est à distribuer ;
- des informations de nature géographique, définissant les zones géographiques sur lesquelles le contenu est à distribuer, ces zones étant notamment caractérisées par leur identifiant de zone et le nombre d'utilisateurs ciblés. Les zones sont par exemple définies par un tableau à deux entrées (IdZone, NbUsers), où IdZone est l'identifiant de la zone (connu du fournisseur OTT et du serveur 100) et NbUsers est le nombre d'utilisateurs ciblés sur cettezone ;
- des informations relatives au profil des utilisateurs à qui le contenu est à distribuer. Les profils sont par exemple définis par un tableau à deux entrées (IdProfil, NbUsers), où IbProfil est l'identifiant du profil (connu du fournisseur OTT et du serveur 100) et NbUsers est le nombre d'utilisateurs ciblés avec ce profil ;
- des informations relatives aux chemins de distribution autorisés (réseau de télévision numérique terrestre, réseau de télévision par satellite, etc.).

L'application BDE interroge l'application de suivi d'émission carbone CT afin de connaître pour chaque chemin de distribution possible 20 l'empreinte carbone qui est associée à ce chemin. Sur cette base, l'application BDE détermine le chemin (mode de distribution) le plus adapté d'un point de vue émission de carbone.

Les modes de distribution sont modélisés pour les différentes infrastructures utilisées pour la distribution en fonction de leur type (TNT, satellite ou multidiffusion) et des zones qui doivent être couvertes. Chacune de ces infrastructures est référencée dans la base de données de l'application BDE avec une quantité (par exemple en grammes) d'émission de carbone correspondante, par exemple pour une utilisation d'une minute et sur une zone donnée. L'émission de carbone d'une même infrastructure peut en effet varier d'une zone à une autre ; par exemple le kW/h est actuellement plus « carboné » en Allemagne qu'en France. L'empreinte carbone d'un mode de distribution est calculée par exemple par l'application BDE en additionnant les émissions de CO₂ des équipements utilisés pour la distribution avec la formule suivante :

SOMME_EQUIPEMENTS_X (CO2(X)^{∗}p(X)^{∗}m(X)) où

NB : nombre d'heures de diffusion en flux continu (streaming) d'un contenu
CO2(X) : émission en CO2 de l'équipement X pour une heure d'utilisation
p(X) : part (en %) d'utilisation de l'équipement X pour une heure de diffusion en flux continu
m(X) : coefficient multiplicateur de l'émission de CO2 en fonction du nombre de diffusions en flux continu d'un même contenu.

De manière optionnelle, la première interface de programmation API CT 110 du serveur 100 transmet, à une étape 130, au fournisseur de service OTT l'information S renseignant sur l'empreinte carbone de la distribution dudit contenu C via le chemin sélectionné par le serveur 100. L'information S peut correspondre à une estimation de l'empreinte carbone. A la réception de l'information S, le fournisseur de service OTT peut valider ou non, à une étape 131, l'envoi du contenu C à diffuser.

La deuxième interface de programmation API CT 120 du serveur 100 peut transmettre, à une étape 190, à l'organisme régulateur et/ou au législateur 180 des données statistiques sur l'empreinte carbone liée à la distribution des contenus C.

À tout moment, à une étape 141, le fournisseur de service OTT peut interroger l'application de suivi d'émission carbone CT via la première interface de programmation API CT 110 pour avoir des informations sur l'empreinte carbone de chemins de distribution de contenus. L'interface API CT 110 répond alors, à l'étape 130, en fournissant des statistiques.

Une fois le chemin de distribution 20 sélectionné, le contenu C est acheminé, à une étape 195, via ce chemin, et mis en mémoire, à une étape 200, dans l'unité de cache utilisateur 150. A une étape 170, lorsque l'utilisateur veut visualiser le contenu C, l'interface API GS de l'unité de cache 150 envoie une requête au lecteur L avec l'URL ou la source d'accès au contenu C.

L'invention n'est pas limitée à l'exemple de réalisation décrit ci-dessus. Par exemple, une information relative à l'empreinte carbone liée à la diffusion d'un contenu peut également être transmise à l'utilisateur.

## Revendications

1. Procédé de sélection d'un réseau de diffusion de contenu numérique en vue d'une mise en mémoire, transitoire ou non, dans au moins une unité de cache utilisateur (150), d'au moins un contenu (C) fourni par un fournisseur de service (OTT), en vue de sa diffusion (170) ultérieure ou sensiblement en temps réel en flux continu à partir de l'unité de cache utilisateur (150), dans lequel :
- on permet au fournisseur de service (OTT) d'adresser à un serveur de distribution (100) une requête relative à un contenu (C) à distribuer, et
- on sélectionne un chemin de distribution vers l'unité de cache utilisateur (150) au moins en fonction de l'empreinte carbone de ce chemin.

2. Procédé selon la revendication précédente, dans lequel on transmet (130) au fournisseur de service (OTT) une information (S) renseignant sur l'empreinte carbone de la distribution dudit contenu via le chemin sélectionné.

3. Procédé selon la revendication précédente, la transmission (130) de ladite information (S) s'effectuant avant la distribution du contenu.

4. Procédé selon l'une quelconque des revendications précédentes, le chemin de distribution étant choisi parmi un réseau de télévision numérique terrestre (DVB_T/T2), un réseau de télévision par satellite (DVB_S/S2), un réseau internet multidiffusion (IP) et/ou un réseau de téléphonie.

5. Procédé de mise en mémoire d'au moins un contenu (C) dans une unité de cache utilisateur (150), dans lequel on adresse ledit contenu (C) à un réseau de diffusion correspondant au chemin sélectionné par la mise en œuvre du procédé selon l'une quelconque des revendications 1 à 4, et on le mémorise dans l'unité de cache utilisateur (150) à sa réception par celle-ci, en vue de sa diffusion (170) ultérieure ou sensiblement en temps réel en flux continu à partir de l'unité de cache utilisateur (150).

6. Procédé de diffusion d'au moins un contenu (C), dans lequel on effectue la mise en mémoire (200) dans une unité de cache utilisateur (150) dudit contenu (C) en mettant en œuvre le procédé selon la revendication précédente, et l'on diffuse vers un lecteur (L) ledit contenu en flux continu à partir de l'unité de cache utilisateur (150).

7. Serveur de distribution (100) d'au moins un contenu numérique (C) pour la mise en œuvre d'un procédé selon l'une quelconque des revendications précédentes, comportant :
- au moins une interface de programmation API GD permettant à un fournisseur de service (OTT) de transmettre au serveur (100) au moins un contenu (C) à distribuer ; et
- une application BDE pour sélectionner un chemin de distribution vers une unité de cache utilisateur (150) au moins en fonction de l'empreinte carbone de ce chemin.

8. Serveur (100) selon la revendication précédente, comportant une application de suivi d'émission carbone (CT) configurée pour récupérer et/ou répertorier des informations sur la quantité de carbone émise lors de la distribution d'un contenu (C), notamment sur une période donnée.

9. Serveur (100) selon la revendication précédente, comportant une première interface de programmation API CT (110) permettant de transmettre (130) au fournisseur de service (OTT) une information (S) renseignant sur l'empreinte carbone pour la distribution des contenus (C) devant être distribués via une mise en mémoire, transitoire ou non, dans les unités de cache utilisateur (150).

10. Serveur (100) selon la revendication précédente, comportant une deuxième interface de programmation API CT (120) permettant de transmettre (190) à un organisme régulateur et/ou au législateur (180) des données statistiques sur l'empreinte carbone liée à la distribution des contenus (C).

11. Serveur (100) selon l'une quelconque des revendications 8 à 10, l'application BDE étant configurée pour interroger l'application de suivi d'émission carbone afin de connaître pour chaque chemin de distribution possible l'empreinte carbone qui est associée à ce chemin.

12. Serveur (100) selon l'une quelconque des revendications 7 à 11, l'interface de programmation API GD étant configurée pour permettre au fournisseur de service (OTT) de transmettre (140) au serveur l'adresse URL ou la source d'accès au contenu (C), l'identifiant du contenu et au moins l'une des informations suivantes, mieux l'ensemble des informations suivantes :
- des informations de nature temporelle, définissant quand ou sur quelle période le contenu est à distribuer ;
- des informations de nature géographique, définissant les zones géographiques sur lesquelles le contenu est à distribuer, ces zones étant notamment **caractérisées par** leur identifiant de zone et le nombre d'utilisateurs ciblés ;
- des informations relatives au profil des utilisateurs à qui le contenu est à distribuer ; et
- des informations relatives aux chemins de distribution autorisés.
